Europäisches Patentamt

European Patent Office

Office européen des brevets

(11) Publication number : **0 444 496 B1**

(12) **EUROPEAN PATENT SPECIFICATION**

(45) Date of publication of patent specification :
**06.07.94 Bulletin 94/27**

(51) Int. Cl.⁵ : **H04N 5/445**

(21) Application number : **91102252.3**

(22) Date of filing : **18.02.91**

(54) **Video signal processing Apparatus.**

(30) Priority : **02.03.90 JP 49467/90**

(43) Date of publication of application :
**04.09.91 Bulletin 91/36**

(45) Publication of the grant of the patent :
**06.07.94 Bulletin 94/27**

(84) Designated Contracting States :
**DE GB**

(56) References cited :
**EP-A- 0 261 893
US-A- 4 186 413
US-A- 4 729 028
US-A- 4 774 582**

(73) Proprietor : **HITACHI, LTD.
6, Kanda Surugadai 4-chome
Chiyoda-ku, Tokyo 101 (JP)**

(72) Inventor : **Moro, Eiji
Meishinryo 601,
426-3, Tabiko
Katsuta-shi (JP)**
Inventor : **Yamada, Yoshio
Meishinryo 701,
426-3, Tabiko
Katsuta-shi (JP)**
Inventor : **Usuda, Koei
2578-6, Sugaya,
Nakamachi
Naka-gun, Ibaraki-ken (JP)**

(74) Representative : **Altenburg, Udo, Dipl.-Phys. et al
Patent- und Rechtsanwälte
Bardehle . Pagenberg . Dost . Altenburg .
Frohwitter . Geissler & Partner
Galileiplatz 1
D-81679 München (DE)**

EP 0 444 496 B1

EP 0 444 496 B1

## Description

BACKGROUND OF THE INVENTION

The present invention relates to a video signal processing apparatus suitably used with a system for receiving video signals having inserted therein information representing the contents of a broadcast program.

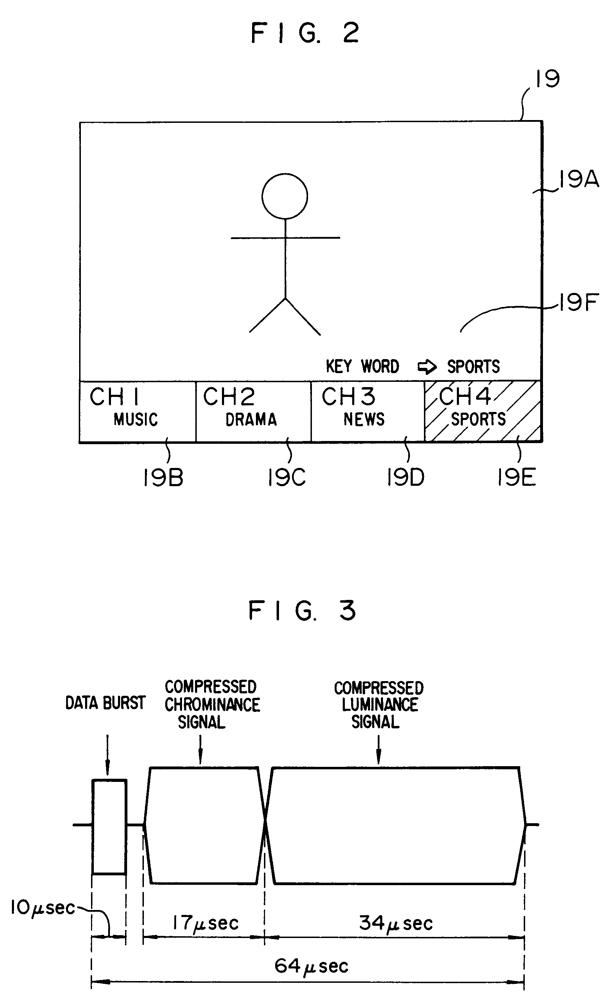

In recent years, a broadcasting system with information representing the contents of a broadcast program inserted and transmitted in a video signal (hereinafter referred to as "the program content information") has been under development for practical applications. The D2-MAC system in Europe is an example. According to the D2-MAC system, which has the same number of scanning lines and the same aspect ratio as the current PAL system, the video band is broadened for higher definition. The signal form of this system, as shown in Fig. 3, has a data burst section, a compressed chromatic signal section for a chrominance signal compressed along time axis and a compressed luminance signal section for a luminance signal compressed also along the time axis in time shared fasion. The chrominance signal is compressed in the ratio of 3 to 1, and the luminance signal in the ratio of 3 to 2 along the time axis.

The data burst section is assigned as digital information including service information and audio signal. As the service information, audio signals of different languages are sent in the data burst section. These information include the information for discriminately selecting each audio signal, information designating an aspect ratio for image display and key information for cancelling the scramble at the time of fee-charging broadcasting. The program content information is also assignable to the data burst section as service information.

This signal of the D2-MAC system (hereinafter referred to as "the MAC signal"), which is used for the satellite broadcasting, is capable of a four-channel broadcast at present. The MAC signal of each channel is transmitted by FM modulation with different modulation carrier frequencies. In a satellite broadcast receiver, these MAC signals of respective channels received through antenna are frequency-converted by down-converter thereby to select a MAC signal of the desired channel by tuner.

In a satellite broadcasting receiver capable of receiving a MAC signal, a signal of the current PAL system providing a terrestrial broadcasting (hereinafter referred to as "the PAL signal") is also receivable, so that either an image due to the MAC signal or the one due to the PAL system may be reproduced selectively.

As described above, in the case where the program content information representing a broadcast program is inserted in a MAC signal, the particular information is capable of being read by use of decoder. This information, which may be utilized for some purposes, has so far been not effectively utilized in view of the fact that this information, although it can be inserted in the data burst section of the MAC signal as service information, is incapable of being obtained unless it represents the content of a program on the air of a channel carrying the same and also unless the particular program is received, and that the reading of this information is equal to the reproduction of a program image.

SUMMARY OF THE INVENTION

The object of the present invention is to provide a video signal processing apparatus convenient to operate by effectively utilizing the program content information inserted in a video signal.

In order to achieve the above-mentioned object, according to the present invention, there is provided a video signal processing apparatus as defined in claim 1.

In the case where the second video signal selected in the manner mentioned above is supplied to a monitor for image display, a character based on the character signal is displayed in a part of the image thereby to display a character representing the program content based on the first video signal on the air. As a result, it becomes possible to know the content of the program on the air based on the first video signal without interrupting the receiving of the second video signal.

BRIEF DESCRIPTION OF DRAWINGS

Fig. 1 is a block diagram showing a video signal processing apparatus according to an embodiment of the present invention.

Fig. 2 is a diagram showing an example of the screen display on a monitor in Fig. 1.

Fig. 3 is a diagram showing a form of the D2-MAC signal.

EP 0 444 496 B1

## DESCRIPTION OF THE PREFERRED EMBODIMENTS

An embodiment of the present invention will be described below with reference to the accompanying drawings.

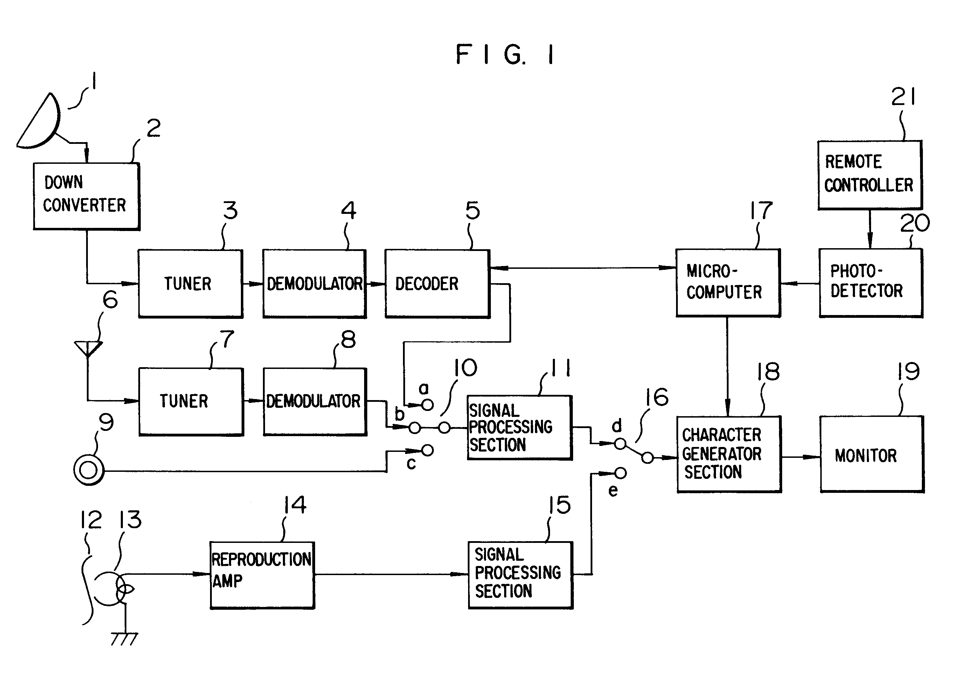

Fig. 1 is a block diagram showing a video signal processing apparatus according to an embodiment of the present invention. Reference numeral 1 designates a satellite broadcast receiving antenna, numeral 2 a down-converter, numeral 3 a tuner, numeral 4 a demodulator, numeral 5 a decoder, numeral 6 a terrestrial broadcast receiving antenna, numeral 7 a tuner, numeral 8 a demodulator, numeral 9 a terminal, numeral 10 a switch, numeral 11 a signal processing section, numeral 12 a magnetic tape, numeral 13 a magnetic head, numeral 14 a reproduction amplifier, numeral 15 a signal processing section, numeral 16 a switch, numeral 17 a microcomputer, numeral 18 a character generator section, numeral 19 a monitor, numeral 20 a photo detector, and numeral 21 a remote controller.

This embodiment, which is used for VTR, is capable of receiving a MAC signal for satellite broadcasting and a PAL signal for terrestrial broadcasting, will be explained as an apparatus capable of supplying a reproduced video signal from the VTR and the magnetic tape to the monitor.

In Fig. 1, the MAC signals for a plurality of channels received at the satellite broadcast receiving antenna 1 are subjected to FM-modulation with different modulation carrier frequencies, and after being frequency-changed at the down converter 2, are supplied to the tuner 3, thereby selecting a MAC signal of the desired channel upon instruction from the microcomputer 17. The MAC signal thus selected is demodulated at the demodulator 4 and is supplied to the decoder 5. In the decoder 5, the audio signal contained in the data burst section (Fig. 3) of the MAC signal thus supplied is extracted and extended along the time axis. The resulting signal is converted into a continuous analog signal, while the compressed luminance signal and chrominance signal are restored to the state before compression by being extended along the time axis, thus generating a video signal in the same form as in the PAL system. This video signal (hereinafter referred to as "the satellite broadcast PAL signal") is supplied to the terminal a of the switch 10.

The decoder 5, on the other hand, reads the service information contained in the data burst section (Fig. 3) of the supplied MAC signal in the form of digital information and is applied to the microcomputer 17. This service information includes the various information described above including the program content information representing the contents of the present broadcast program associated with the MAC signal supplied to the decoder 5, and each information is decoded by the microcomputer 17.

Further, the microcomputer 17 is supplied with such informations of the MAC signal from the decoder 5 as the video level, the contrast, the color saturation, the timing between the luminance signal and the chrominance signal, and the error rate, which are thus checked or controlled. If the error rate becomes abnormal, for instance, the microcomputer 17 controls the tuner 3 and performs such operations re-tuning to the MAC signal of the channel being tuned to.

The current PAL system signals for the terrestrial broadcasting of a plurality of channels (hereinafter referred to as "the terrestrial broadcast PAL signal") are received from the terrestrial broadcast receiving antenna 6, and a desired channel is selected by the tuner 7. The terrestrial broadcast PAL signal thus selected is demodulated at the demodulator 8 and is supplied to the terminal b of the switch 10. Also, the terminal 9 makes up an external input terminal supplied with a PAL signal (hereinafter referred to as "the external input PAL signal") from such a device as video camera. This external input PAL signal is supplied to the terminal c of the switch 10.

One of the PAL signals selected to the switch 10 is processed at the signal processing section 11 including an automatic gain control circuit etc. and is supplied to the terminal d of the switch 16. Also, when a magnetic tape having recorded therein a signal mixture including the FM-modulated luminance signal and the down-converted chrominance signal is to be reproduced, the signal mixture reproduced at the magnetic head 13, after being amplified at the reproduction amplifier 14, is supplied to the signal processing section 15, in which the luminance signal is demodulated and the chrominance signal is subjected to high-frequency conversion, thereby assuming the same signal form as the video signal of the PAL system (hereinafter referred to as "the reproduced PAL signal"). This reproduced PAL signal is supplied to the terminal e of the switch 16. The switch 16 selects one of the PAL signals supplied to the terminals d and e.

The character generator section 18 generates a character signal under the control of the microcomputer 17 and superposes the particular character signal on the PAL signal selected at the switch 16. The PAL signal, upon production from the character generator section 18, is supplied to the monitor 19 for image reproduction.

The tuners 3, 7 for channel selection are controlled, the switches 10, 16 are switched, and the magnetic tape 12 is controlled for recording and reproduction by the microcomputer 17 in compliance with an instruction by user operation from the operating section of a front panel not shown or received from the remote controller through the photo-detector section 20. The input video signals of the character generator section 18 corre-

3

sponding to the state of the switches 10, 16 are shown in the table below.

## Table

| No. | Selection terminal of switch 10 | Selection terminal of switch 16 | Input signal of character generator section 18 |
|-----|------|------|------|
| 1 | a | d | PAL signal for satelite broadcast |
| 2 | b | d | PAL signal for terrestrial broadcast |
| 3 | c | d | External input PAL signal |
| 4 | -- | e | Reproduced PAL signal |

In the case of No. 1 in the above table, the processing section from the down converter 2 to the decoder 5 is energized, so that the satellite broadcast PAL signal is supplied to the character generator section 18. At the same time, the microcomputer 17 reads and decodes the program content information extracted from the decoder 5. The character generator section 18 superposes the character signal of this decoded content on the image portion of the satellite broadcast PAL signal supplied. As a result, a character information explaining the contents of the particular program is displayed by being superposed on a part of the image due to the satellite broadcast PAL signal. This character information may include the description of music, drama and sports, whereby the user may be informed of the program contents.

In the case of observing a program of the PAL signal of the satellite broadcasting by means of the monitor 19, it may be that the above-mentioned character information is displayed on the monitor 19 only in response to the instruction operated by the user at the remote controller 21.

Also, in order to reduce power consumption, the power may be interrupted to the circuits other than those required for receiving and processing the MAC signal.

In the case of No. 2 in the above-shown table, the monitor 19 displays an image due to the terrestrial broadcast PAL signal. In the process, low power consumption is attained by interrupting the power source of the processing sections from the down converter 2 to the decoder 5, the reproduction amplifier 14 and the signal processing section 15. When the user operates the MAC information search button on the remote controller 21, the processing section from the down converter 2 to the decoder 5 is supplied with power, so that the tuner 3 is controlled by the microcomputer 17, and MAC signals for a plurality of channels received at the satellite broadcast receiving antenna 1 are sequentially selected by the tuner 3 for each predetermined time. The decoder 5 extracts the program content information from these MAC signals. The microcomputer 17 sequentially fetches and decodes these program content information, and holds the resulting data in a built-in RAM (random access memory), while at the same time reading and sending these data to the character generator section 18 sequentially. The above-mentioned predetermined time for selecting a MAC signal of each channel by the tuner 3 is set to longer than the time required for decoding each program content information by the microcomputer 17. Also, the microcomputer 17, upon decoding one program content information, may switch the tuner 3 to select a MAC signal of the next channel. The character generation section 18 generates character information in accordance with the data sent thereto, and superposes it on the image portion of the terrestrial broadcast PAL signal supplied thereto from the switch 16. As a result, the character information representing the content of the program on the air of each channel received at the satellite broadcast receiving antenna 1 is displayed on a portion of the screen displaying the image due to the terrestrial broadcast PAL signal.

4

Fig. 2 shows an example of display on the monitor 19. Numeral 19A designates an image display area due to the terrestrial broadcast PAL signal, and numerals 19B, 19C, 19D and 19E display areas of the character information representing the contents of the present broadcast program of the first, second, third and fourth channels of the satellite broadcast respectively.

In this case, the satellite broadcast is in four channels, and the first channel is presently assumed to broadcast a music program, the second channel a drama program, the third channel a news program and the fourth channel a sport program. As a consequence, the display area 19B displays the character information "CH1" indicating a music program, the display area 19C the character information "CH2" indicating a drama program, the display area 19D the character information "CH3" indicating a news program, and the display area 19D the character information "CH4" indicating a sport program.

Upon a repeated operation of the MAC information search button of the remote controller 21, the microcomputer 17 prohibits the operation of superposing the character information on the ground broadcast PAL signal at the character generation section 18. As a result, the monitor 19 terminates the display of the character information in the display areas 19B to 19E and displays an image due to the terrestrial broadcast PAL signal over the whole screen including the display areas 19B to 19E.

The character information on the display areas 19B to 19E may be adapted to disappear automatically a predetermined time after starting display without operating the MAC information search button at the remote controller 21. Also, once the program content is changed, the content of the character information displayed on the monitor 19 also undergoes a change. Assume, for example, that a music program has changed to a weather forecast program in the first channel. In Fig. 2, the character information in the display area 19B changes from a music program to a weather forecast program.

The processing section from the down converter 2 to the decoder 5 is automatically cut off in power after the microcomputer 17 has decoded the program content information for all the channels of satellite broadcasting.

The above-mentioned operation is similar to that for No. 3 and No. 4 in Table.

In the manner mentioned above, even at the time of receiving a PAL signal other than the MAC signal, it is possible to know the program content on the air of each channel of the satellite broadcast. It is therefore not necessary to switch to a program whose content the user wants to know from the program currently received and displayed, nor to interrupt the program currently received and displayed. As a result, no image disturbance would be caused which otherwise might occur due to such an interruption.

In the case mentioned above, an image due to the terrestrial broadcast PAL signal is displayed on the monitor 19. When the user is desirous of viewing a sport program, he or she operates the MAC information search button of the remote controller 21 sometimes, so that as shown in Fig. 2, the character information is displayed on the display areas 19B to 19E. In the case where the character indicates a sport program at the fourth channel of the satellite broadcast in the display area 19E, for example, the remote controller 21 or the like is operated to switch to the fourth channel of the satellite broadcasting.

The RAM of the microcomputer 17 has set therein a key word corresponding to each program content information representing the content of each program. When a key word for the desired program content is designated by operating the remote controller 21, therefore, the tuner 3 is switched as described above, and each channel of the satellite broadcasting is received. When the microcomputer decodes the program content information of these channels, they are compared with the program content information of the key word designated. Upon coincidence therebetween, the microcomputer 17 is adapted to switch to the indication of receiving the MAC signal containing the particular program content information. In this way, upon designation of a key word, the receiving indication is automatically switched to the particular program with the starting of broadcasting the program of the desired content, thereby further improving the operating convenience.

In such a case as mentioned above, the microcomputer 17 of course controls the tuner 3 constantly or at regular intervals of time for switching the receiving of all the channels of satellite broadcasting.

Also, as shown by numeral 19F in Fig. 2, the program content indicated by a designated key word may be displayed on the monitor 19 as desired, whereby it is possible to confirm the designation of a key word and a particular program whose receiving indication is desired. In such a case, the microcomputer 17 forms a related character information at the character generator section 18 and superposes it on the PAL signal from the switch 16.

Apart from the MAC and PAL signals used in the above-described embodiments, other video signals may be used as far as they contain similar program content information.

It will thus be understood from the foregoing description that according to the present invention there is provided a video signal processing apparatus wherein during the period of displaying the image of the first video signal broadcast, the program content of another video signal transmitted simultaneously is capable of being recognized without interrupting the image display associated with the first video signal, thereby greatly improving the operating convenience.

## Claims

1. A video signal processing apparatus comprising first means (1, 2, 3, 4) for receiving a first video signal having inserted therein digital program content information representing the content of a program being broadcast, second means (5, 17) for decoding and reading the program content information from said first video signal, third means (6, 7, 8) for receiving a second video signal, fourth means (10, 11, 16) for selecting one of the first and the second video signal, and fifth means (18) for generating and superposing character information on the second video signal selected by the fourth means,
   wherein when the fourth means selects the second video signal and the second means has read the program content information from the first video signal, the fifth means generates character information representing the content of the program associated with the program content information thus read and superposes the character information on the second video signal.

2. A video signal processing apparatus according to Claim 1, wherein said first video signal has a plurality of channels capable of being broadcast simultaneously, and when the fourth means selects the second video signal, the first means receives each of the channels in the first video signal having a plurality of channels sequentially for a predetermined time thereby to read the program content information from the signal having a plurality of channels, the fifth means superposing the character information representing the program content associated with the program information thus read on the second video signal.

3. A video signal processing apparatus according to Claim 1, further comprising means for setting key words for the program content information, and means for designating a key word, wherein the second means searches the first video signal containing the program content information associated with a designated key word.

4. A video signal processing apparatus according to Claim 2, further comprising means for setting key words for the program content information, and means for designating a key word, wherein the second means searches the first video signal containing the program content information associated with a designated keyword.

5. A video signal processing apparatus according to Claim 3, wherein the fifth means superposes the character information of the program content information associated with the designated key word on the second video signal.

6. A video signal processing apparatus according to Claim 4, wherein the fifth means superposes the character information associated with the program content information of a designated key word on the second video signal.

## Patentansprüche

1. Vorrichtung zum Verarbeiten eines Videosignales, die aufweist:
   eine erste Einrichtung (1, 2, 3, 4) zum Empfangen eines ersten Videosignales aufweist, in das eine digitale Programminhalts-Information eingefügt ist, die den Inhalt eines Programmes darstellt, das übertragen wird,
   eine zweite Einrichtung (5, 17) zum Decodieren und Lesen der Programminhalts-Information von dem ersten Videosignal,
   eine dritte Einrichtung (6, 7, 8) zum Empfangen eines zweiten Videosignales,
   eine vierte Einrichtung (10, 11, 16) zum Auswählen eines aus dem ersten und zweiten Videosignal, und fünfte Einrichtungen (18) zum Erzeugen und Überlagern von Zeicheninformation auf das zweite Videosignal, das durch die vierten Einrichtungen ausgewählt worden ist,
   worin, wenn die vierte Einrichtung das zweite Videosignal auswählt, und die zweite Einrichtung die Programminhalts-Information von dem ersten Videosignal gelesen hat, die fünfte Einrichtung eine Zeicheninformation erzeugt, die den Inhalt des Programmes darstellt, das der so gelesenen Programminhalts-Information zugeordnet ist, und die Zeicheninformation dem zweiten Videosignal überlagert.

2. Vorrichtung zum Verarbeiten eines Videosignales gemäß Anspruch 1, in der das erste Videosignal eine Vielzahl von Kanälen aufweist, die gleichzeitig übertragen werden können, und worin, wenn die vierte Einrichtung das zweite Videosignal auswählt, die erste Einrichtung jeden der Kanäle in dem ersten Videosignal empfängt, das eine Vielzahl von Kanälen hat, und zwar sequentiell für eine vorbestimmte Zeit, um dadurch die Programminhalts-Information von dem Signal mit einer Vielzahl von Kanälen zu lesen, wobei die fünfte Einrichtung die Zeicheninformation, die den Programminhalt darstellt, der der so gelesenen Programminformation zugeordnet ist, dem zweiten Videosignal überlagert.

3. Vorrichtung zum Verarbeiten eines Videosignales gemäß Anspruch 1, die weiterhin eine Einrichtung zum Festlegen von Schlüsselwörtern für die Programminhalts-Information aufweist, und eine Einrichtung zum Bestimmen eines Schlüsselwortes, wobei die zweite Einrichtung das erste Videosignal sucht, das die Programminhalts-Information enthält, die einem bestimmten Schlüsselwort zugeordnet ist.

4. Vorrichtung zum Verarbeiten eines Videosignales gemäß Anspruch 2, die weiterhin eine Einrichtung zum Festlegen von Schlüsselwörtern für die Programminhalts-Information, und eine Einrichtung zum Bestimmen eines Schlüsselwortes aufweist, wobei die zweite Einrichtung das erste Videosignal sucht, das die Programminhalts-Information enthält, die einem bestimmten Schlüsselwort zugeordnet ist.

5. Vorrichtung zum Verarbeiten eines Videosignales gemäß Anspruch 3, in der die fünfte Einrichtung die Zeicheninformation der Programminhalts-Information, die dem bestimmten Schlüsselwort zugeordnet ist, dem zweiten Videosignal überlagert.

6. Vorrichtung zum Verarbeiten eines Videosignales gemäß Anspruch 4, in der die fünfte Einrichtung die Zeicheninformation der Programminhalts-Information, die der Programminhalts-Information eines bestimmten Schlüsselwortes zugeordnet ist, dem zweiten Videosignal überlagert.

## Revendications

1. Un dispositif de traitement de signal vidéo, comportant des premiers moyens (1, 2, 3, 4) pour recevoir un premier signal vidéo comprenant, insérée à l'intérieur, une information numérique de contenu de programme représentant le contenu d'un programme en cours de diffusion, des deuxièmes moyens (5, 17) pour décoder et lire l'information de contenu de programme à partir du premier signal vidéo, des troisièmes moyens (6, 7, 8) pour recevoir un second signal vidéo, des quatrièmes moyens (10, 11, 16) pour choisir l'un ou l'autre du premier et du second signal vidéo et des cinquièmes moyens (18) pour générer et superposer une information en caractères sur le second signal vidéo sélectionné par les quatrièmes moyens,

   dans lequel les quatrièmes moyens sélectionnent le second signal vidéo et les deuxièmes moyens ont lu l'information de contenu de programme à partir du premier signal vidéo, les cinquièmes moyens produisent l'information en caractères représentant le contenu du programme associé à l'information de contenu du programme ainsi lue et superposent l'information en caractères au second signal vidéo.

2. Un dispositif de traitement de signal vidéo selon la revendication 1, dans lequel le premier signal vidéo comprend une pluralité de chaînes pouvant être diffusées simultanément et, lorsque les quatrièmes moyens sélectionnent le second signal vidéo, les premiers moyens reçoivent chacune des chaînes du premier signal vidéo comprenant une pluralité de chaînes de manière séquentielle pendant un durée prédéterminée, de manière à lire l'information de contenu du programme à partir du signal comprenant la pluralité de chaînes, les premiers moyens superposant l'information en caractères représentant le contenu du programme associée à l'information de programme ainsi lue sur le second signal vidéo.

3. Un dispositif de traitement de signal vidéo selon la revendication 1, comprenant en outre des moyens pour établir des mots-clefs pour l'information de contenu de programme, et des moyens pour désigner un mot-clef, les seconds moyens recherchant le premier signal vidéo contenant l'information de contenu de programme associée à un mot-clef désigné.

4. Un dispositif de traitement de signal vidéo selon la revendication 2, comprenant en outre des moyens pour établir des mots-clefs pour l'information de contenu de programme, et des moyens pour désigner un mot-clef, les seconds moyens recherchant le premier signal vidéo contenant l'information de contenu de programme associée à un mot-clef désigné.

5. Un dispositif de traitement de signal vidéo selon la revendication 3, dans lequel les cinquièmes moyens superposent l'information en caractères de l'information de contenu de programme associée au mot-clef désigné sur le second signal vidéo.

6. Un dispositif de traitement de signal vidéo selon la revendication 4, dans lequel les cinquièmes moyens superposent l'information en caractères associée à l'information de contenu de programme d'un mot-clef désigné sur le second signal vidéo.

F I G. I

DOWN CONVERTER — 2

1

TUNER — 3

DEMODULATOR — 4

DECODER — 5

6

TUNER — 7

DEMODULATOR — 8

9

a / b / c — 10

SIGNAL PROCESSING SECTION — 11

12 13

REPRODUCTION AMP — 14

SIGNAL PROCESSING SECTION — 15

d / e — 16

MICRO-COMPUTER — 17

CHARACTER GENERATOR SECTION — 18

MONITOR — 19

PHOTO-DETECTOR — 20

REMOTE CONTROLLER — 21

FIG. 2

KEY WORD ⇨ SPORTS

| CH1 MUSIC | CH2 DRAMA | CH3 NEWS | CH4 SPORTS |

FIG. 3

DATA BURST | COMPRESSED CHROMINANCE SIGNAL | COMPRESSED LUMINANCE SIGNAL

10 μsec

17 μsec    34 μsec

64 μsec

10